# EUROPEAN PATENT APPLICATION

(11) **EP 3 812 166 A1**
(43) Date of publication of application: **28.04.2021**
(21) Application number: 19822010.5
(22) Date of filing: 13.06.2019
(51) Int. Cl.: B60C 1/00, B29D 30/38, B60C 9/18, B60C 9/20, B60C 9/22

(54) **PNEUMATIC TIRE AND PRODUCTION METHOD FOR RESIN-COATED BELT**

(30) Priority: 19.06.2018 JP 2018116439
(71) Applicant: Bridgestone Corporation, Chuo-Ku Tokyo 104-8340 (JP)
(72) Inventor: HASEGAWA, Keiichi, Tokyo 104-8340 (JP)
(74) Representative: Oxley, Robin John George
(86) International application number: PCT/JP2019/023522
(87) International publication number: WO 2019/244774

(57) **Abstract**

Provided is a pneumatic tire according to the present disclosure that is a pneumatic tire comprising, in a tread portion, an annular resin-coated belt comprising a cord and a coating resin with which the cord is coated, and the resin-coated belt comprises an easy-to-deform part having a thickness in a tire radial direction smaller than that of a surrounding part thereof.

## Description

### TECHNICAL FIELD

The present disclosure relates to a pneumatic tire, and a manufacturing method of a resin-coated belt.

### BACKGROUND

Heretofore, in a pneumatic tire, for a purpose of exerting a hoop effect of tightening a carcass to increase rigidity of a tread, a belt is usually disposed outside the carcass in a tire radial direction (e.g., PTL1).

In recent years, demand for weight reduction of a tire has increased, and it has been suggested that a cord coated with a coating resin is used as a belt. If such a resin-coated belt is used, a function of the belt can be exerted while achieving the weight reduction, because a resin has high rigidity compared to that otherwise expected from its weight.

### CITATION LIST

### Patent Literature

PTL 1: Japanese Patent Laid-Open No. 10-035220

### SUMMARY

### (Technical Problem)

If such a resin-coated belt is used, rigidity of the resin-coated belt in an in-plane direction (hereinafter, referred to as "the in-plane rigidity") can be increased. However, not only the in-plane rigidity but also rigidity of the resin-coated belt in an out-of-plane direction (hereinafter, referred to as "the out-of-plane rigidity") increase, and hence ride comfort performance is easy to be impaired.

An object of the present disclosure is to provide a pneumatic tire comprising a resin-coated belt capable of improving ride comfort performance, and a manufacturing method of the resin-coated belt by which the resin-coated belt capable of improving the ride comfort performance of the pneumatic tire can be obtained.

### (Solution to Problem)

A pneumatic tire as a first aspect of the present disclosure is a pneumatic tire comprising, in a tread portion, an annular resin-coated belt comprising a cord and a coating resin with which the cord is coated, wherein the resin-coated belt comprises an easy-to-deform part having a thickness in a tire radial direction smaller than that of a surrounding part thereof.

A manufacturing method of a resin-coated belt as a second aspect of the present disclosure is a manufacturing method of an annular resin-coated belt comprising a cord and a coating resin with which the cord is coated, the method comprising a transfer step of pressing a rotating body, comprising an uneven surface in an outer surface, onto at least one surface of a resin-coated body from which the resin-coated belt is originated, to transfer the uneven surface of the rotating body to the coating resin that forms the at least one surface of the resin-coated body.

### (Advantageous Effect)

The present disclosure can provide a pneumatic tire comprising a resin-coated belt capable of improving ride comfort performance, and a manufacturing method of the resin-coated belt by which the resin-coated belt capable of improving the ride comfort performance of the pneumatic tire can be obtained.

### BRIEF DESCRIPTION OF THE DRAWINGS

In the accompanying drawings:
FIG. 1 is a cross-sectional view of a pneumatic tire as an embodiment of the present disclosure in a cross section parallel to a tire width direction;
FIG. 2 is a view illustrating a cross section of a resin-coated belt illustrated in FIG. 1 that is orthogonal to the tire width direction;
FIG. 3 is a view illustrating an outline of an example of a manufacturing method of a resin-coated belt illustrated in FIG. 2;
FIG. 4 is a view illustrating a modification of the tire illustrated in FIG. 1; and
FIG. 5 is a view illustrating another modification of the resin-coated belt illustrated in FIG. 2.

### DETAILED DESCRIPTION

Hereinafter, description will be made as to embodiments of a pneumatic tire and a manufacturing method of a resin-coated belt according to the present disclosure with reference to the drawings. In each drawing, common members and regions are denoted with the same reference signs.

Hereinafter, it is considered that a dimension of each element, a length relationship between respective elements, a positional relation therebetween, and the like are measured in a reference state where a pneumatic tire is assembled to an applicable rim, filled with a prescribed internal pressure and unloaded, unless otherwise mentioned.

Here, "the applicable rim" indicates an approved rim (a measuring rim in Standards Manual of ETRTO, and a design rim in Year Book of TRA) in an applicable size described or to be described in future in an industrial standard effective in a district where the pneumatic tire is produced and used, for example, JATMA Year Book of JATMA (the Japan Automobile Tyre Manufacturers Association) in Japan, Standards Manual of ETRTO (the European Tyre and Rim Technical Organization) in Europe, Year Book of TRA (the Tire and Rim Association, Inc.) in U.S. or the like (i.e., the above "applicable rim" also includes a size that may be included in the above industrial standard in future, in addition to the existing size. Examples of "the size to be described in future" include sizes described as "future developments" in 2013 edition of ETRTO. However, it is considered that a rim having a size that is not described in the above industrial standard refers to a rim having a width corresponding to a bead width of the pneumatic tire. Furthermore, "the prescribed internal pressure" refers to an air pressure (a maximum air pressure) corresponding to a maximum load capacity of a single wheel in an applicable size and ply rating described in Year Book of JATMA described above, or the like. The prescribed internal pressure for a rim having a size that is not described in the above industrial standard refers to an air pressure (the maximum air pressure) corresponding to the maximum load capacity prescribed for each vehicle to which the tire is assembled. Additionally, "the maximum load" that will be described later refers to a load corresponding to the above tire maximum load capacity of the standard of JATMA or the like among tires having the applicable size, or the maximum load for a rim having a size that is not described in the above industrial standard means a load corresponding to the maximum load capacity prescribed for each vehicle to which the tire is assembled.

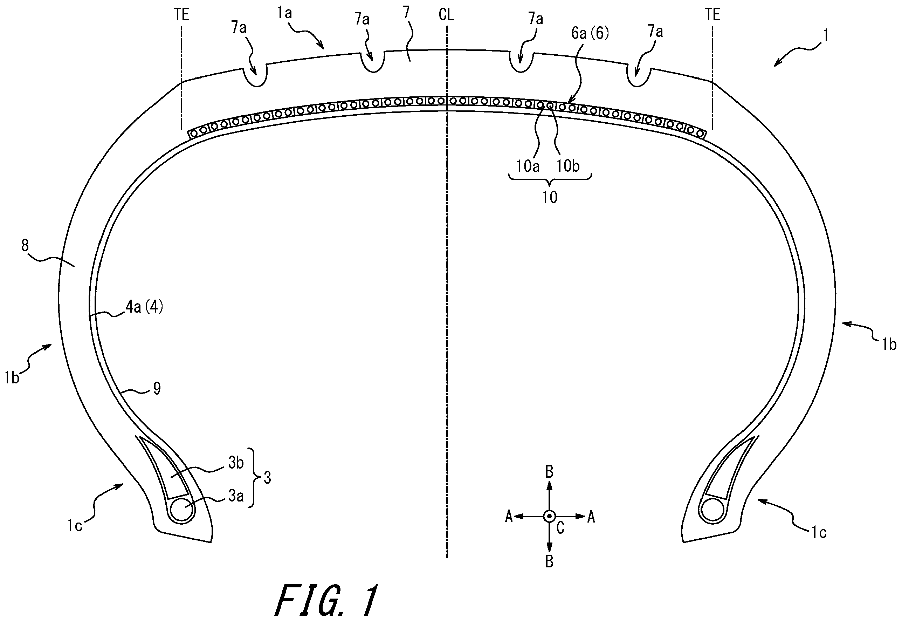

FIG. 1 is a view illustrating a pneumatic tire 1 (hereinafter referred to simply as "the tire 1") as an embodiment of the present disclosure. FIG. 1 is a cross-sectional view of the tire 1 in a cross section parallel to a tire width direction A. Hereinafter, this cross section will be described as "the tire width direction cross section". The tire 1 of the present embodiment has a configuration symmetric to a tire equatorial plane CL, but may have a configuration asymmetric to the tire equatorial plane CL.

As illustrated in FIG. 1, the tire 1 comprises a tread portion 1a, a pair of sidewall portions 1b extending from opposite end portions of the tread portion 1a in the tire width direction A to an inner side in a tire radial direction B, and a pair of bead portions 1c provided in end portions inside the respective sidewall portions 1b in the tire radial direction B. The tire 1 of the present embodiment is a radial tire of a tubeless type for passenger vehicle. Here, "the tread portion 1a" means a portion sandwiched between tread edges TE on opposite sides in the tire width direction A. Furthermore, each of "the bead portions 1c" means a portion where a bead member 3 described later is located in the tire radial direction B. Then, each of "the sidewall portions 1b" means a portion between the tread portion 1a and the bead portion 1c. Note that each of "the tread edges TE" means a position of a contact patch on an outermost side in the tire width direction in a state where the tire is mounted to the above applicable rim, filled with the above prescribed internal pressure, and loaded with the maximum load.

The tire 1 comprises the bead member 3, a carcass 4, a resin-coated belt 6, a tread rubber 7, a side rubber 8, and an inner liner 9.

### [Bead Member 3]

The bead member 3 is embedded in the bead portion 1c. The bead member 3 comprises a bead core 3a, and a bead filler 3b made of a rubber and located outside the bead core 3a in the tire radial direction B. The bead core 3a comprises a plurality of bead wires having a periphery coated with the rubber. Each bead wire is formed of a steel cord. The steel cord may comprise, for example, a steel monofilament or stranded wire. Note that the bead core 3a of the present embodiment has a configuration where a bead wire is coated with a rubber, but may have a configuration where a part surrounding the bead wire is coated with a resin. Furthermore, the bead filler 3b of the present embodiment is made of the rubber, but may be made of a resin.

### [Carcass 4]

The carcass 4 straddles between the pair of bead portions 1c, more specifically between the bead cores 3a of the pair of bead members 3, and extends toroidally. Furthermore, the carcass 4 includes at least a radial structure.

Furthermore, the carcass 4 is constituted of one or more carcass plies 4a (one ply in the present embodiment) in which a carcass cord is disposed at an angle, for example, from 75° to 90° in a tire circumferential direction C (see FIG. 1 or the like). This carcass ply 4a comprises a ply main body located between the pair of bead cores 3a, and a ply folded portion folded from an inner side to an outer side in the tire width direction A around the bead core 3a, at each end of this ply main body. Furthermore, the bead filler 3b extending from the bead core 3a to the outer side in the tire radial direction B in a tapered state is disposed between the ply main body and the ply folded portion. As the carcass cord that forms the carcass ply 4a, in the present embodiment, a polyester cord is employed. Alternatively, an organic fiber cord made of nylon, rayon, aramid or the like may be used, or a metal cord made of steel may be employed as required. Furthermore, a number of the carcass plies 4a may be two or more.

### [Resin-Coated Belt 6]

The resin-coated belt 6 is annular, and extends over an entire area in the tire circumferential direction C. Furthermore, the resin-coated belt 6 comprises a cord 10b, and a coating resin 10a with which the cord 10b is coated.

Furthermore, the resin-coated belt 6 is disposed outside a crown portion of the carcass 4 in the tire radial direction B, in the tread portion 1a. Specifically, the resin-coated belt 6 of the present embodiment comprises one or more belt layers (one layer in the present embodiment) disposed outside the crown portion of the carcass 4 in the tire radial direction B. More specifically, as illustrated in FIG. 1, the resin-coated belt 6 of the present embodiment is constituted of a circumferential belt 6a comprising only one circumferential belt layer.

The circumferential belt 6a as the resin-coated belt 6 of the present embodiment is a spiral belt formed in a state where a steel cord as a metal belt cord is spirally wound around a tire central axis along the tire circumferential direction C (see FIG. 1 or the like) at an angle of 10° or less, preferably 5° or less, more preferably 2° or less in the tire circumferential direction C. More specifically, the circumferential belt 6a as the resin-coated belt 6 of the present embodiment is formed by a resin-coated cord 10 comprising the cord 10b, such as a steel cord coated with the coating resin 10a. Further specifically, the circumferential belt 6a as the resin-coated belt 6 is constituted of the resin-coated cord 10 comprising the cord 10b in a state of being spirally wound and coated with the coating resin 10a.

In the resin-coated cord 10, portions adjacent to each other in the tire width direction A are joined together. In the present embodiment, the portions of the resin-coated cord 10 that are adjacent to each other in the tire width direction A are joined together by welding the coating resin 10a. However, the joining of the portions of the resin-coated cord 10 that are adjacent to each other in the tire width direction A is not limited to the welding, and may be performed by bonding with an adhesive or the like.

As illustrated in FIG. 1, the resin-coated cord 10 of the present embodiment comprises two steel cords, and may be a resin-coated cord comprising only one steel cord or a resin-coated cord comprising three or more steel cords.

For the cord 10b, any known material may be used, and, for example, the above steel cord may be used. The steel cord may comprise, for example, a steel monofilament or stranded wire. Furthermore, for the cord 10b, organic fibers, carbon fibers, stranded wires of such fibers, or the like may be used.

Furthermore, for the coating resin 10a, for example, a thermoplastic elastomer or a thermoplastic resin may be used. Alternatively, a resin that causes crosslinking by heat or electron beams, or a resin that cures by thermal dislocation may be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, for example, a thermoplastic resin may be used in which a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation similarly prescribed in JIS K7113 is 50% or more, and a Vicat softening temperature (a method A) prescribed in JIS K7206 is 130°C or more. It is preferable that a tensile elastic modulus (prescribed in JIS K7113: 1995) of the coating resin 10a with which the cord 10b is coated is 50 MPa or more. Furthermore, it is preferable that the tensile elastic modulus of the coating resin 10a with which the cord 10b is coated is 1000 MPa or less. Note that the coating resin 10a mentioned herein does not include a rubber (an organic polymer substance exhibiting rubber elasticity at normal temperature).

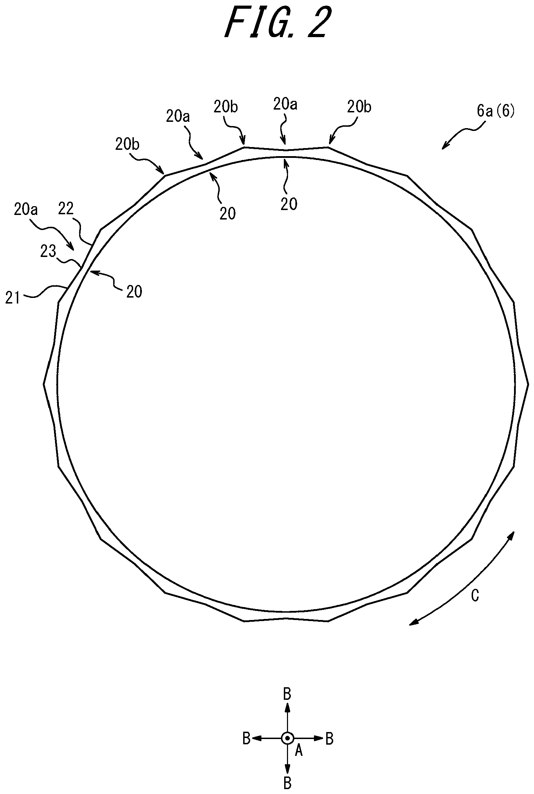

FIG. 2 is a view illustrating a cross section of the resin-coated belt 6 that is orthogonal to the tire width direction A. As illustrated in FIG. 2, the annular resin-coated belt 6 comprises an easy-to-deform part 20 having a thickness in the tire radial direction B smaller than that of a surrounding part thereof. Thus, the annular resin-coated belt 6 is provided with the easy-to-deform part 20, so that out-of-plane rigidity can be decreased to improve ride comfort performance while maintaining in-plane rigidity of the annular resin-coated belt.

More specifically, an outer surface of the resin-coated belt 6 of the present embodiment in the tire radial direction B is constituted of an uneven surface. Furthermore, the easy-to-deform part 20 of the resin-coated belt 6 of the present embodiment is formed at a position of a recess 20a in the outer surface of the resin-coated belt 6 in the tire radial direction B. That is, the resin-coated belt 6 of the present embodiment comprises the easy-to-deform part 20 at the position of the recess 20a in the outer surface in the tire radial direction B. Consequently, if the position of the recess 20a in the outer surface of the resin-coated belt 6 is provided with the easy-to-deform part 20 that is thinner than the surrounding part, the easy-to-deform part 20 can be easily formed by processing the outer surface of the resin-coated belt 6.

Furthermore, in the uneven surface that forms the outer surface of the resin-coated belt 6 of the present embodiment in the tire radial direction B (a surface on an outer side in the tire radial direction B), the recess 20a extending in the tire width direction A and a protrusion 20b protruding to the outer side in the tire radial direction B and extending in the tire width direction A are repeatedly formed in the tire circumferential direction C. More specifically, the outer surface of the resin-coated belt 6 of the present embodiment in the tire radial direction B is constituted of a wavy-shaped uneven surface that repeats, toward the tire circumferential direction C, increase and decrease in a distance (hereinafter, referred to simply as "a radius") from a tire central axis in the tire radial direction B. Such an uneven surface can inhibit a variation of the out-of-plane rigidity of the resin-coated belt 6 in the tire circumferential direction C. Consequently, the ride comfort performance can be further improved.

Note that a plurality of protrusions 20b are arranged and separated by a predetermined distance in the tire circumferential direction C, and a distance between two protrusions 20b adjacent to each other in the tire circumferential direction C is almost constant regardless of a position in the tire circumferential direction C. Thus, the plurality of protrusions 20b are distributed and arranged at a constant pitch in the tire circumferential direction C, so that the variation in the out-of-plane rigidity in the tire circumferential direction C can be inhibited. Consequently, the ride comfort performance can be further improved.

Furthermore, radii of apexes of the plurality of protrusions 20b are almost constant regardless of the position in the tire circumferential direction C. Thus, the radii of the apexes of the plurality of protrusions 20b arranged at different positions in the tire circumferential direction C are set to be almost constant, so that the variation in the out-of-plane rigidity in the tire circumferential direction C can be inhibited. Consequently, the ride comfort performance can be further improved.

Furthermore, the recess 20a of the present embodiment is a groove having a V-shaped cross section in cross-sectional view (see FIG. 2) orthogonal to the tire width direction A and extending in the tire width direction A. Specifically, the groove as the recess 20a of the present embodiment is partitioned by two groove surfaces 21 and 22 that form a bottom portion 23 with crossing ridges. Consequently, if an external force such as a ground load acts from an out-of-plane direction, the resin-coated belt 6 of the present embodiment is deformed at the position of the recess 20a prior to a position of the surrounding part in the tire circumferential direction C. For example, if the ground load from the ground acts on the resin-coated belt 6, the groove surfaces 21 and 22 are moved close to each other via the bottom portion 23 (moved so that an angle of a V-shape decreases), while the belt is deformed inward in the tire radial direction B at the position of the recess 20a. In other words, the recess 20a of the present embodiment comprises the bottom portion 23, and is therefore easy to bend sufficiently against the external force from the out-of-plane direction, such as the ground load, as compared with the position of the surrounding part, so that the out-of-plane rigidity of the resin-coated belt 6 can be decreased. As a result, the ride comfort performance can be further improved.

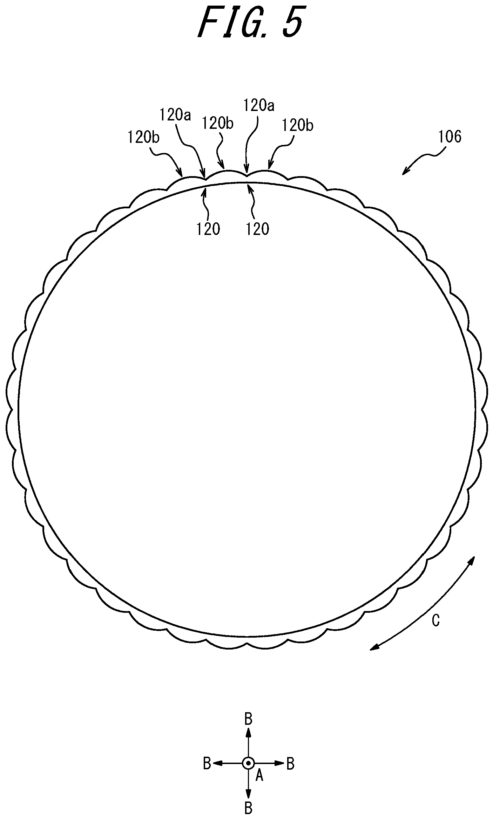

Note that a shape of the recess 20a is not limited to the shape in the present embodiment. For example, the recess may be a recess formed by a recessed and curved surface. Alternatively, the recess may have another shape (see FIG. 5). From a viewpoint that the out-of-plane rigidity can be locally and efficiently decreased, it is preferable that the recess comprises the bottom portion 23 easy to bend due to the external force from the out-of-plane direction as in the recess 20a of the present embodiment. On the other hand, from a viewpoint of avoiding excessive stress concentration, it is preferable that the recess is constituted of, for example, a recessed and curved surface that forms a recessed and curved line in the cross-sectional view orthogonal to the tire width direction A.

Furthermore, it is preferable that an inner surface of the resin-coated belt 6 in the tire radial direction B (a surface on an inner side in the tire radial direction B) is constituted of not the uneven surface but a circumferential surface. Both surfaces of the resin-coated belt 6 in the tire radial direction B may be constituted of uneven surfaces, but a configuration where one of the surfaces is constituted of the uneven surface is easier to process. Furthermore, the outer surface of the resin-coated belt 6 in the tire radial direction B is easier to process than the inner surface of the resin-coated belt 6 in the tire radial direction B. That is, the easy-to-deform part 20 is easily formed. Therefore, it is particularly preferable that the outer surface of the resin-coated belt 6 in the tire radial direction B is constituted of the uneven surface and that the inner surface of the resin-coated belt 6 in the tire radial direction B is constituted of the circumferential surface.

Note that it is preferable that a minimum thickness of the easy-to-deform part 20 is 1/2 or more of a maximum thickness of the resin-coated belt 6 (a thickness of the protrusion 20b at a position of the apex in the present embodiment).

The resin-coated belt 6 of the present embodiment is formed in a state where the resin-coated cord 10 is spirally wound. However, there are not any special restrictions on such a configuration, as long as a plurality of cords 10b arranged in the tire width direction A and extending along the tire circumferential direction C or extending to be inclined at an angle smaller than 10° in the tire circumferential direction C are coated with the coating resin 10a. However, it is preferable that the resin-coated cord 10 is spirally wound as in the resin-coated belt 6 of the present embodiment. According to such a configuration, in-plane rigidity of the resin-coated belt 6 in the tire circumferential direction can be increased, and steering stability can be improved. Additionally, the out-of-plane rigidity can be decreased by the easy-to-deform part 20, and the ride comfort performance can be improved. That is, the steering stability is compatible with the ride comfort performance.

### [Tread Rubber 7 and Side Rubber 8]

The tread rubber 7 forms an outer surface of the tread portion 1a in the tire radial direction B (hereinafter, referred to as "the tread outer surface"), and in the tread outer surface of the present embodiment, a tread pattern including a circumferential groove 7a extending in the tire circumferential direction C (see FIG. 1 or the like), a non-illustrated width direction groove extending in the tire width direction A and the like is formed. The side rubber 8 forms an outer surface of the sidewall portion 1b in the tire width direction A, and is formed integrally with the tread rubber 7.

### [Inner Liner 9]

The inner liner 9 is stacked on an inner surface of the carcass 4, and is made of a butyl-based rubber having low air permeability in the present embodiment. Note that the butyl-based rubber means butyl rubber, and its derivative, halogenated butyl rubber.

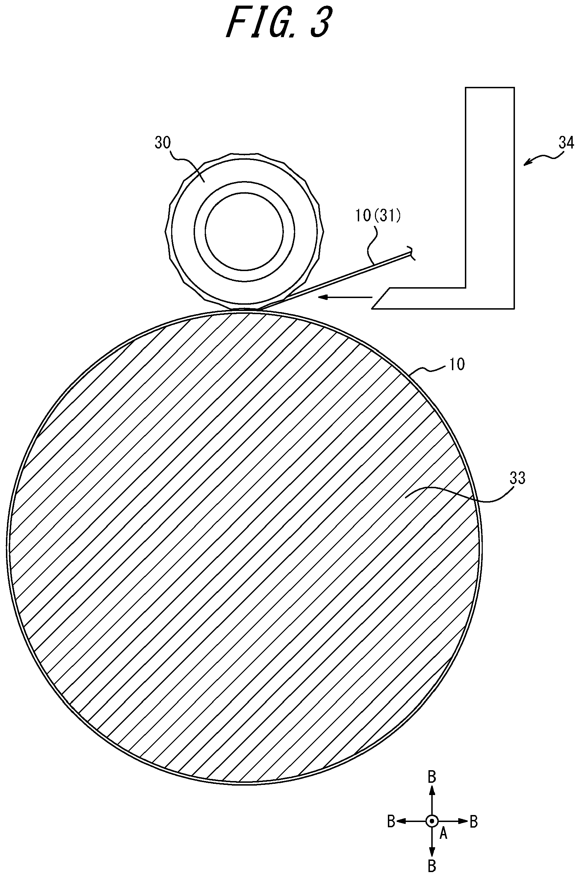

Next, an example of a manufacturing method of the resin-coated belt according to the present disclosure will be described. The manufacturing method of the resin-coated belt according to the present disclosure is applicable as a manufacturing method of the annular resin-coated belt 6 (see FIG. 1). Here, as the example of the manufacturing method of the resin-coated belt according to the present disclosure, an example of the manufacturing method of the annular resin-coated belt 6 (see FIG. 1) is described. FIG. 3 is a view illustrating an outline of the example of the manufacturing method of the resin-coated belt 6.

The manufacturing method of the resin-coated belt 6 illustrated in FIG. 3 includes a transfer step of pressing a rotating body 30, comprising an uneven surface in an outer surface, onto one surface of a resin-coated body 31 from which the resin-coated belt 6 is originated, more specifically a surface that forms the outer surface of the resin-coated belt 6 in the tire radial direction B in the present embodiment, to transfer the uneven surface of the rotating body 30 to the one surface of the resin-coated body 31, more specifically the coating resin 10a (see FIG. 1) that forms the surface forming the outer surface of the resin-coated belt 6 in the tire radial direction B in the present embodiment.

Specifically, the resin-coated body 31 of the present embodiment is the resin-coated cord 10 (see FIG. 1). In the present embodiment, the resin-coated cord 10 as the resin-coated body 31 is spirally wound around a drum 33 while softening the cord with heat due to hot air (see an arrow of FIG. 3) from a heater 34 or the like. In the present embodiment, the uneven surface of the outer surface of a roller as the rotating body 30 is pressed onto the resin-coated cord 10 as the resin-coated body 31 softened with the heat, to transfer the uneven surface to the resin-coated cord 10. Specifically, the resin-coated cord 10 in a state of being softened with the heat is conveyed between an outer surface of the drum 33 and the outer surface of the rotating body 30. The conveyed resin-coated cord 10 is sandwiched between the outer surface of the drum 33 and the outer surface of the rotating body 30, to transfer the above uneven surface to the coating resin 10a (see FIG. 1), and the cord is wound around the drum 33.

Note that as described above, while winding the resin-coated cord 10 around the drum 33, the portions adjacent to each other in an axial direction (hereinafter, referred to as "the tire axial direction A" for convenience of explanation) of the drum 33 are joined together by the welding, the axial direction forming the tire width direction A. In the present embodiment, the resin-coated cord 10 is wound around the drum 33 while melting, with heat, a side surface of the resin-coated cord 10 in the tire width direction A, and consequently, the portions of the resin-coated cord 10 that are adjacent to each other in the tire width direction A are joined together by welding the coating resin 10a.

Thus, in the present embodiment, the above transfer step is executed simultaneously with a winding step of spirally winding the resin-coated cord 10. In this case, a number of steps can be decreased and a manufacturing efficiency can be increased, as compared with a case where the winding step and the transfer step are separately executed.

Note that in the example illustrated in FIG. 3, the uneven surface is transferred to the one surface of the resin-coated cord 10 as the resin-coated body 31 wound around the drum 33, the one surface forming an outer surface of the cord in the tire radial direction B, and the uneven surface may be transferred to another surface that forms an inner surface of the cord in the tire radial direction B. In such a case, for example, the uneven surface may be provided on the outer surface of the drum 33. Consequently, in the transfer step, the uneven surface is transferred to at least one surface of the surface that forms the outer surface of the resin-coated body 31 in the tire radial direction and the surface that forms the inner surface of the resin-coated body 31 in the tire radial direction.

Furthermore, in the present embodiment, the resin-coated cord 10 is used as the resin-coated body 31, but an original form of a strip-shaped belt comprising the plurality of cords 10b (see FIG. 1) coated with the coating resin 10a (see FIG. 1) may be used as the resin-coated body.

Instead of using a method of transferring the uneven surface to the resin-coated body 31 as in the manufacturing method of the resin-coated belt 6 illustrated in FIG. 3, the uneven surface may be formed by a method of forming the original form of the resin-coated belt and then subjecting it to post processing such as cutting or deformation. However, from a viewpoint of increasing the manufacturing efficiency, it is preferable to use the transfer step as in the manufacturing method of the resin-coated belt 6 illustrated in FIG. 3.

Note that the uneven surface of the resin-coated belt 6 is not eliminated during vulcanizing, and is maintained even in a vulcanized and finished product as the tire 1.

The pneumatic tire according to the present disclosure is not limited to specific configurations illustrated in the above embodiment and modification, and can be variously modified and changed without departing from the scope of claims.

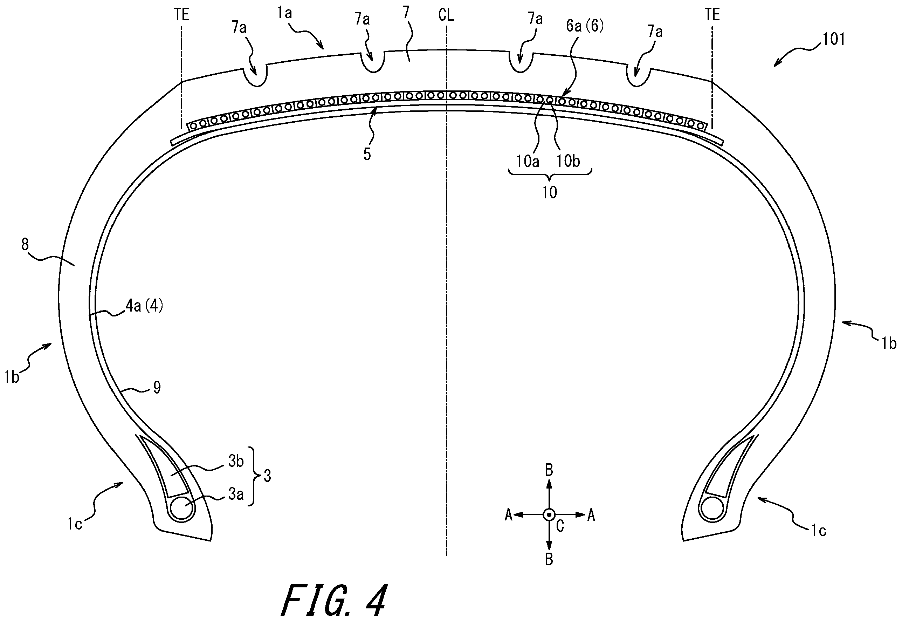

Furthermore, a resin annular body 5 may be disposed between the carcass 4 and the resin-coated belt 6. FIG. 4 is a view illustrating a tire 101 in which the resin annular body 5 is disposed between the carcass 4 and the resin-coated belt 6.

As illustrated in FIG. 4, the resin annular body 5 is disposed in a tread portion 1a. The resin annular body 5 illustrated in FIG. 4 is disposed between the carcass 4 and the resin-coated belt 6 at a position outside a crown portion of the carcass 4 in a tire radial direction B. The resin annular body 5 is in contact with a coating resin 10a of the resin-coated belt 6. Furthermore, the resin annular body 5 extends to an outer side of the resin-coated belt 6 in a tire width direction A.

The resin annular body 5 does not comprise any cords, differently from the resin-coated belt 6. That is, any cords are not arranged in the resin annular body 5.

As the resin that forms the resin annular body 5, for example, a thermoplastic elastomer or a thermoplastic resin may be used similarly to a material illustrated as the above material of the coating resin 10a. Alternatively, a resin that causes crosslinking by heat or electron beams, or a resin that cures by thermal dislocation may be used. Note that the resin that forms the resin annular body 5 does not include a rubber (an organic polymer substance exhibiting rubber elasticity at normal temperature).

Thus, the resin annular body 5 is provided, so that the resin-coated belt 6 can be reinforced, and damages on the resin-coated belt 6 can be inhibited.

FIG. 5 is a view illustrating a resin-coated belt 106 as a modification of the resin-coated belt 6 illustrated in FIG. 2. In an outer surface of the resin-coated belt 106 in a tire radial direction B illustrated in FIG. 5, a plurality of protrusions 120b each constituted by a curved surface protruding in a convex manner toward an outer side in the tire radial direction B are provided along a tire circumferential direction C. Furthermore, in the outer surface of the resin-coated belt 106 in the tire radial direction B illustrated in FIG. 5, a recess 120a is partitioned between two protrusions 120b adjacent to each other in the tire circumferential direction C. That is, the outer surface of the resin-coated belt 106 in the tire radial direction B illustrated in FIG. 5 is an uneven surface constituted of the recesses 120a and the protrusions 120b. Each protrusion 120b illustrated in FIG. 5 extends over an entire area of the resin-coated belt 106 in a tire width direction A. The recess 120a illustrated in FIG. 5 is a groove extending over the entire area of the resin-coated belt 106 in the tire width direction A. Therefore, an easy-to-deform part 120 of the resin-coated belt 106 illustrated in FIG. 5 is formed at a position of the recess 120a in the outer surface in the tire radial direction B.

### INDUSTRIAL APPLICABILITY

The present disclosure relates to a pneumatic tire, and a manufacturing method of a resin-coated belt.

### REFERENCE SIGNS LIST

- 1 and 101: pneumatic tire
- 1a: tread portion
- 1b: sidewall portion
- 1c: bead portion
- 3: bead member
- 3a: bead core
- 3b: bead filler
- 4: carcass
- 4a: carcass ply
- 5: resin annular body
- 6 and 106: resin-coated belt
- 6a: circumferential belt
- 7: tread rubber
- 7a: circumferential groove
- 8: side rubber
- 9: inner liner
- 10: resin-coated cord
- 10a: coating resin
- 10b: cord
- 20 and 120: easy-to-deform part
- 20a and 120a: recess
- 20b and 120b: protrusion
- 21 and 22: groove surface
- 23: bottom portion
- 30: rotating body
- 31: resin-coated body
- 33: drum
- 34: heater
- A: tire width direction
- B: tire radial direction
- C: tire circumferential direction
- CL: tire equatorial plane
- TE: tread edge

## Claims

1. A pneumatic tire comprising, in a tread portion, an annular resin-coated belt comprising a cord and a coating resin with which the cord is coated, wherein the resin-coated belt comprises an easy-to-deform part having a thickness in a tire radial direction smaller than that of a surrounding part thereof.

2. The pneumatic tire according to claim 1, wherein an outer surface of the resin-coated belt in the tire radial direction is constituted of an uneven surface, and
the easy-to-deform part of the resin-coated belt is formed at a position of a recess in an outer surface of the resin-coated belt in the tire radial direction.

3. The pneumatic tire according to claim 2, wherein in the uneven surface that forms the outer surface of the resin-coated belt in the tire radial direction, the recess extending in a tire width direction and a protrusion protruding to an outer side in the tire radial direction and extending in the tire width direction are repeatedly formed in a tire circumferential direction.

4. The pneumatic tire according to claim 2 or 3, wherein an inner surface of the resin-coated belt in the tire radial direction is constituted of a circumferential surface.

5. The pneumatic tire according to any one of claims 1 to 4, wherein the resin-coated belt is constituted of a resin-coated cord comprising the cord in a state of being spirally wound and coated with the coating resin.

6. A manufacturing method of an annular resin-coated belt comprising a cord and a coating resin with which the cord is coated, the method comprising a transfer step of pressing a rotating body, comprising an uneven surface in an outer surface, onto at least one surface of a resin-coated body from which the resin-coated belt is originated, to transfer the uneven surface of the rotating body to the coating resin that forms the at least one surface of the resin-coated body.
